# EUROPEAN PATENT APPLICATION

(11) **EP 4 783 419 A1**
(43) Date of publication of application: **29.07.2026**
(21) Application number: 23960030.7
(22) Date of filing: 20.12.2023
(51) Int. Cl.: H02K 1/2713

(54) **ROTOR STRUCTURE AND ELECTRIC MOTOR**

(30) Priority: 01.12.2023 CN 202311643490
(71) Applicant: Gree Electric Appliances, Inc. of Zhuhai, Zhuhai, Guangdong 519070 (CN); Zhuhai Kaibang Motor Manufacture Co., Ltd., Zhuhai, Guangdong 519110 (CN)
(72) Inventor: CHEN, Bin, Zhuhai, Guangdong 519070 (CN); GU, Xiping, Zhuhai, Guangdong 519070 (CN); CAI, Yilin, Zhuhai, Guangdong 519070 (CN); XIAO, Shengyu, Zhuhai, Guangdong 519070 (CN); XIAO, Yong, Zhuhai, Guangdong 519070 (CN); LI, Xia, Zhuhai, Guangdong 519070 (CN)
(74) Representative: Zacco GmbH
(86) International application number: PCT/CN2023/140409
(87) International publication number: WO 2025/112128

(57) **Abstract**

Provided are a rotor structure and an electric motor. The rotor structure includes: first rotor assembly, the first rotor assemblies being provided two sets, each set of the first rotor assembly including a first rotor iron core and a first permanent magnet, the first rotor iron core and the first permanent magnet being disposed adjacent to each other, a protrusion extending along a radial direction of the first rotor iron core being provided on a radially outer side of the first rotor iron core, and the first rotor iron core being provided with a first shaft hole for a rotating shaft to pass through; a second rotor assembly, wherein the second rotor assembly includes a second rotor iron core and a second permanent magnet; the second rotor iron core is provided with a second shaft hole; a plurality of magnetic steel slots are provided in the circumferential direction of the second rotor iron core; and each of the magnetic steel slots is provided with a plurality of second permanent magnet. The two sets of first rotor assemblies are respectively disposed at two ends of the second rotor assembly, and the second rotor iron core is disposed between the first permanent magnet of the two sets of first rotor assemblies, so as to solve the problems in the art known to inventors that the assembly difficulty is large and the reliability of an electric motor is low due to the fact that a plurality of rotor assembly have a large repulsion force.

## Description

### Technical Field

The present invention relates to the technical field of permanent magnet electric motors, and in particular, to a rotor structure and an electric motor. The present invention claims priority to a patent invention entitled "Rotor Structure and Electric Motor", filed with the China National Intellectual Property Administration on 04 December 2023, with Application No. 2023116434902.

### Background

Permanent magnet electric motors have advantages such as small volume and high efficiency, and are widely used in fields such as air conditioners, industrial equipment, and new energy automobiles. With the improvement of the energy efficiency standard of the electric motor, higher requirements are put forward on the energy efficiency grade of the electric motor, and for a permanent magnet electric motor, the efficiency of the electric motor needs to be improved and the degree of high torque density needs to be improved. The main technical means for improving the efficiency and the torque density of an electric motor is that a permanent magnet is built-in to obtain a larger air gap magnetic density and a larger magnetic flux, but since the magnetic circuit structure of a rotor is fixed, the improvement of the energy efficiency is limited. Another means is to increase the salient pole ratio of the electric motor by using the rotor structure and increase the reluctance torque of the electric motor so as to compensate for the deficiency of the permanent magnet torque, and the efficiency thereof can be made to be equivalent to that of a permanent magnet motor; however, a larger volume of the rotor is generally required, which can make the torque density of the electric motor inferior to that of the permanent magnet motor. For existing permanent magnet electric motors, to further achieve higher efficiency and higher torque density, enhancing the flux-concentrating effect of the rotor constitutes an effective approach.

In the art known to inventors, a new permanent magnet electric motor emerges, and the energy efficiency of the permanent magnet electric motor is improved by combining multiple rotor assembly. However, the structure thereof is complex, and a repulsive force exists when a plurality of rotor assembly are assembled, resulting in problems of high assembly difficulty and low motor reliability.

In view of the above problem, it has not been solved effectively at present.

### Summary

The main purpose of the present invention is to provide a rotor structure and an electric motor, so as to solve the problems in the art known to inventors that the assembly difficulty is large and the reliability of the electric motor is low due to the large repulsion force of a multi-rotor assembly.

In order to achieve the described object, according to one aspect of the present invention, provided is a rotor structure, including a first rotor assembly, wherein two sets of the first rotor assemblies are provided, and each set of the first rotor assembly including a first rotor iron core and a first permanent magnet, the first rotor iron core and the first permanent magnet being disposed adjacent to each other; a protrusion extending along a radial direction of the first rotor iron core being provided on a radially outer side of the first rotor iron core, the first rotor iron core being provided with a first shaft hole for a rotating shaft to pass through; a second rotor assembly, wherein the second rotor assembly includes a second rotor iron core and a second permanent magnet; the second rotor iron core is provided with a second shaft hole; a plurality of magnetic steel slots are provided in a circumferential direction of the second rotor iron core; and each of the plurality of magnetic steel slots is provided with the second permanent magnet. Two sets of first rotor assemblies are respectively disposed at two ends of the second rotor assembly, the second rotor iron core is disposed between the first permanent magnets of the two sets of the first rotor assemblies, and the first permanent magnet is disposed between an end portion of the second rotor assembly and the first rotor iron core.

Furthermore, one or more protrusions are provided to extend outwards along the radial direction of the first rotor iron core.

Furthermore, the number of protrusions 23 is a, where a/4 is an integer.

Furthermore, a plurality of protrusions are provided, and when projected on an axial end face of the rotor structure along an axial direction of the rotor structure, a geometric centre of the protrusion or a geometric centre of an adjacent protrusion is connected with a central axis of the first rotor iron core to form a connecting line, a central angle formed between adjacent connecting lines is b, and the number of pole pairs of the rotor structure is p, wherein b/360/2p = b0, b0 is an integer.

Furthermore, b/(360/2p)=b0, b0 is an odd number.

Furthermore, when projected on an axial end face of the rotor structure along an axial direction of the rotor structure, a length of a connecting line between a central axis of the first rotor iron core and any point of an outer circle of the first rotor iron core is c, a length of a connecting line between a central axis of the second rotor iron core and any point of an outer circle of the second rotor iron core is d, wherein max(c) = max(d).

Furthermore, when projected on an axial end face of the rotor structure along an axial direction of the rotor structure, a length of a connecting line between a central axis of the first rotor iron core and any point of an outer circle of the first permanent magnet is e, a maximum length of a central axis of the second rotor iron core and an end, away from the second shaft hole, of the second permanent magnet is f, a length of a connecting line between the central axis of the second rotor iron core and any point of an outer circle of the second rotor iron core is d, wherein min(e) = f, or max(e)≤max(d).

Furthermore, a plurality of protrusions are provided, and the plurality of protrusions are disposed in pairs along a circumference of the first rotor iron core.

Furthermore, the first permanent magnet is an integrated disc structure, and is divided into a plurality of different polar regions according to the magnetizing direction.

Furthermore, when projected on an axial end face of the rotor structure along an axial direction of the rotor structure, and positions of at least one pair of the protrusions corresponds to a position of a magnetic pole boundary line of adjacent polar regions of the first permanent magnet.

Furthermore, two adjacent pairs of protrusions are disposed symmetrically with respect to a central line of a polar region of the first permanent magnet.

Furthermore, a length of the protrusion extending in the radial direction of the first rotor iron core is g, and a minimum thickness of the first rotor iron core in an axial direction is h, wherein g≥0.3*h.

Furthermore, when projected on an axial end face of the rotor structure along an axial direction of the rotor structure, a thickness of the second permanent magnet along a magnetic filling direction thereof is i, and an interval width between adjacent protrusions along a tangential direction of the first rotor iron core is j, wherein j≥0.25*i.

Furthermore, the first rotor iron core is provided with a limiting member, the first permanent magnet is provided with a limiting structure, and the limiting member is disposed corresponding to the limiting structure.

Furthermore, a plurality of limiting members are provided, a plurality of limiting structures are provided, and the plurality of limiting members and the plurality of limiting structures are disposed in a one-to-one correspondence.

Furthermore, a boss is provided on a side of the first rotor iron core facing the first permanent magnet, the boss being provided with a first shaft hole for a rotating shaft to pass through, and a relief channel is provided on the first permanent magnet, and a part of the boss passes through the relief channel.

Furthermore, a rotor assembly dynamic balance adjustment structure is provided on the first rotor iron core.

Furthermore, the first rotor iron core and the second rotor iron core are both made of a magnetically conductive material.

Furthermore, the first rotor iron core is formed by stamping a magnetically conductive steel plate, and the second rotor iron core is formed by laminating silicon steel sheets.

Furthermore, a second rotor iron core segment is formed between two adjacent magnetic steel slots on the second rotor iron core, and in a case where a polar region of the first permanent magnet adjacent to the second rotor iron core segment in an axial direction is a first polarity, the polar region of the two second permanent magnet adjacent to the second rotor iron core segment in the circumferential direction is also the first polarity.

According to another aspect of the present invention, provided is an electric motor, including a rotor structure and a stator structure, wherein the rotor structure is the described rotor structure.

By applying the technical solution of the present invention, a rotor structure includes a first rotor assembly and a second rotor assembly, and a magnetic flux line emitted from an axial direction of the first rotor assembly and a magnetic flux line emitted from a radial direction of the second rotor assembly are concentrated in an iron core of the rotor structure and subsequently to enter an air gap, thereby substantially enhancing the magnetic concentrating effect of the rotor structure. Two sets of first rotor assemblies are provided, and each set of first rotor assembly includes a first rotor iron core and a first permanent magnet, the first rotor iron core and the first permanent magnet are disposed adjacent to each other. A protrusion extending circumferentially along the first rotor iron core is disposed along the circumferential direction of the first rotor iron core to divert a portion of the magnetic flux lines of the first permanent magnet, causing the magnetic flux lines to directly pass through the air gap and enter the stator. This reduces the repulsive force between the first rotor assembly and the second rotor assembly, facilitates assembly, and solves the problems in the art known to inventors of difficult assembly and low motor reliability resulting from the large repulsion force of a multi-rotor assembly.

### Brief Description of the Drawings

The accompanying drawings, which form a part of the present invention, are used to provide further understanding of the present invention. **The** schematic embodiments and illustrations of the present invention are used to explain the present invention, and do not form improper limits to the present invention. **In** the drawings:
Fig. 1 illustrates a schematic structural diagram of a first example of a rotor assembly according to the present invention;
Fig. 2 illustrates a schematic structural diagram of a second example of a rotor assembly according to the present invention;
Fig. 3 illustrates a schematic structural diagram of a third example of a rotor assembly according to the present invention;
Fig. 4 illustrates a schematic structural diagram of a fourth example of a rotor assembly according to the present invention;
Fig. 5 illustrates a schematic structural diagram of a fifth example of a rotor assembly according to the present invention;
Fig. 6 illustrates a schematic structural diagram of a sixth example of a rotor assembly according to the present invention;
Fig. 7 illustrates a schematic structural diagram of a seventh example of a rotor assembly according to the present invention;
Fig. 8 illustrates a schematic structural diagram of an eighth example of a rotor assembly according to the present invention;
Fig. 9 illustrates a schematic structural diagram of a ninth example of a rotor assembly according to the present invention;
Fig. 10 illustrates a schematic structural diagram of a first exemplary example of a rotor assembly according to the present invention;
Fig. 11 illustrates a schematic structural diagram of an eleventh example of a rotor assembly according to the present invention;
Fig. 12 illustrates a schematic structural diagram of a twelfth example of a rotor assembly according to the present invention;
Fig. 13 illustrates a schematic structural diagram of a thirteenth example of a rotor assembly in accordance with the present invention;
Fig. 14 illustrates a schematic comparison diagram of a rotor assembly according to the present invention and a magnetic concentrating technology according to the art known to inventors;
Fig. 15 illustrates a schematic comparison diagram of a rotor assembly according to the present invention and an unloaded flux linkage according to the art known to inventors;
Fig. 16 illustrates a schematic comparison diagram of a rotor assembly according to the present invention in and an air gap magnetic seal in the art known to inventors.

The figures include the following reference signs:
10, second rotor assembly;
11, second rotor iron core; 111, second rotor iron core segment;
12, second permanent magnet;
13, second shaft hole;
20, first rotor assembly;
21, first rotor iron core;
22, first shaft hole; 211, limiting member;
23, protrusion;
24, first permanent magnet; 241, limiting structure; 242, relief channel;
25, boss;
L, central axis.

### Detailed Description of the Embodiments

It is important to note that the embodiments of the present invention and the characteristics in the examples can be combined under the condition of no conflicts. The present invention will be described below with reference to the drawings and examples in detail.

It should be noted that the terminology used herein is for the purpose of describing particular embodiments only and is not intended to be limiting of exemplary embodiments in accordance with the present invention. As used herein, the singular form is intended to include the plural form as well, unless the context clearly indicates otherwise, and further it should be understood that the terms "comprises" and/or "comprising", when used in this description, specify the presence of features, steps, operations, devices, components, and/or combinations thereof.

It should be noted that the terms "first" and "second" in the description, claims, and accompanying drawings of the present invention are used to distinguish similar objects, and are not necessarily used to describe a specific sequence or order. It should be understood that the terms so used are interchangeable under appropriate circumstances such that the embodiments of the present invention described herein, for example, can be practiced in sequences other than those illustrated or described herein. In addition, the terms "include" and "have", and any variations thereof, are intended to cover a non-exclusive inclusion, for example, a process, method, system, product, or apparatus that includes a series of steps or units is not necessarily limited to those steps or units that are expressly listed, but may include other steps or units that are not expressly listed or inherent to such process, method, product, or apparatus.

Exemplary embodiments according to the present invention will now be described in more detail with reference to the accompanying drawings. These exemplary embodiments may, however, be embodied in many different forms and should not be construed as limited to only the embodiments set forth herein. It is to be understood that these embodiments are provided so that this invention of the present invention will be thorough and complete, and will fully convey the concept of these exemplary embodiments to those of ordinary skill in the art. In the drawings, it is possible to expand thicknesses of layers and regions for clarity, and use the same reference signs to refer to the same devices, and thus their description will be omitted.

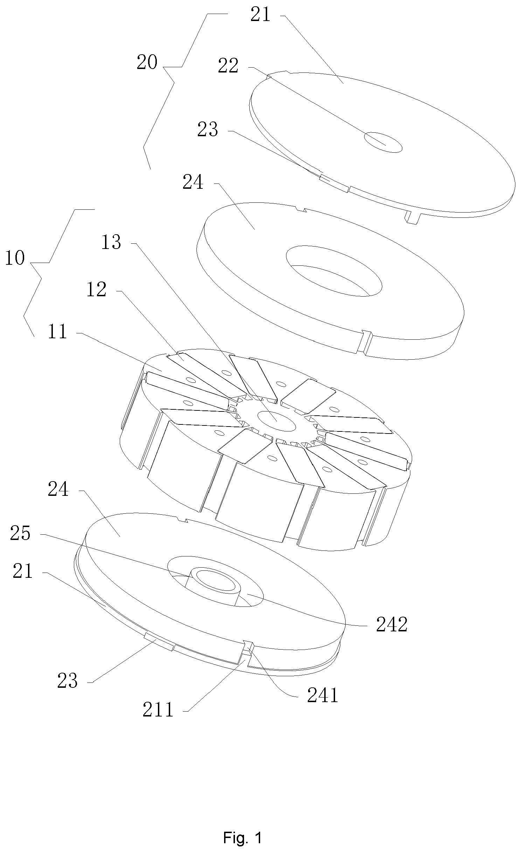

With reference to Fig. 1 to Fig. 13, in a specific embodiment of the present invention, a rotor structure is provided.

Specifically, the rotor structure includes a first rotor assembly 20, two sets of the first rotor assemblies 20 are provided, each set of the first rotor assembly 20 includes a first rotor iron core 21 and a first permanent magnet 24, the first rotor iron core 21 and the first permanent magnet 24 are disposed adjacent to each other; a protrusion 23 extending along a radial direction of the first rotor iron core 21 is arranged on a radially outer side of the first rotor iron core 21, the first rotor iron core 21 is provided with a first shaft hole 22 for a rotating shaft to pass through; a second rotor assembly 10, the second rotor assembly 10 includes a second rotor iron core 11 and a second permanent magnet 12, the second rotor iron core 11 is provided with a second shaft hole 13, a plurality of magnetic steel slots are provided in a circumferential direction of the second rotor iron core 11, and each of the magnetic steel slots is provided with the second permanent magnet 12. Two sets of first rotor assemblies 20 are respectively disposed at two ends of the second rotor assembly 10, the second rotor iron core 11 is disposed between the first permanent magnets 24 of the two sets of first rotor assemblies 20, and the first permanent magnet 24 is disposed between an end portion of the second rotor assembly 10 and the first rotor iron core 21.

The magnetic flux lines emitted from the axial direction of the first rotor assembly 20 and the magnetic flux lines emitted from the radial direction of the second rotor assembly 10 of the second rotor assembly 10 enter the air gap after being concentrated in the iron core of the rotor structure, so that the magnetic concentrating effect of the rotor structure can be greatly improved. Two sets of first rotor assemblies 20 are provided, and each set of first rotor assembly 20 includes a first rotor iron core 21 and a first permanent magnet 24, the first rotor iron core 21 and the first permanent magnet 24 are disposed adjacent to each other. A protrusion 23 extending along the circumferential direction of the first rotor iron core 21 is disposed in the circumferential direction of the first rotor iron core 21 to divert a portion of the magnetic flux lines of the first permanent magnet 24, causing the magnetic flux lines directly penetrate through the air gap and enters the stator. This reduces the repulsive force between the first rotor assembly 20 and the second rotor assembly 10, facilitates assembly, and solve the problems in the art known to inventors of difficulty assembly and low motor reliability resulting the large repulsion force of a multi-rotor assembly.

Referring to Fig. 1, in the present embodiment, the rotor structure includes the first rotor assembly 20 and the second rotor assembly 10, which can significantly improve a magnetic concentrating effect of the rotor structure. Two sets of first rotor assemblies 20 are provided; each set of first rotor assembly 20 includes the first rotor iron core 21 and the first permanent magnet 24; the first rotor iron core 21 and the first permanent magnet 24 are adjacently disposed; and a protrusion 23 extending along a radial direction of the first rotor iron core 21 is provided on a radially outer side of the first rotor iron core 21, so as to reduce the repulsive force between each rotor assembly and reduce the assembly difficulty. Magnetic flux lines emitted from the axial direction of the first rotor assembly 20 and magnetic flux lines emitted from the radial direction of the second rotor assembly 10 of the second rotor assembly 10 enter an air gap after being concentrated in the first rotor iron core 21 and the second rotor iron core 11, which can achieve the effect of greatly improving the magnetic concentrating effect of the rotor structure.

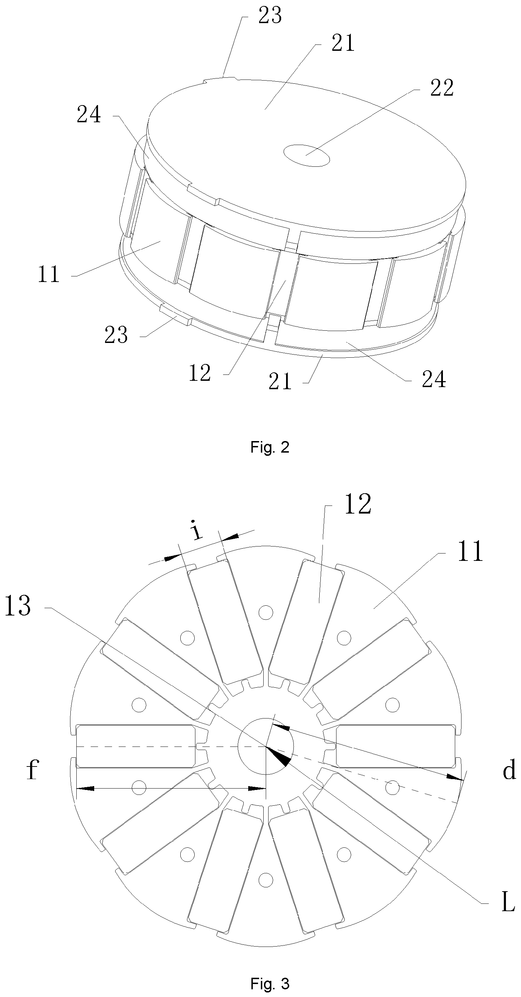

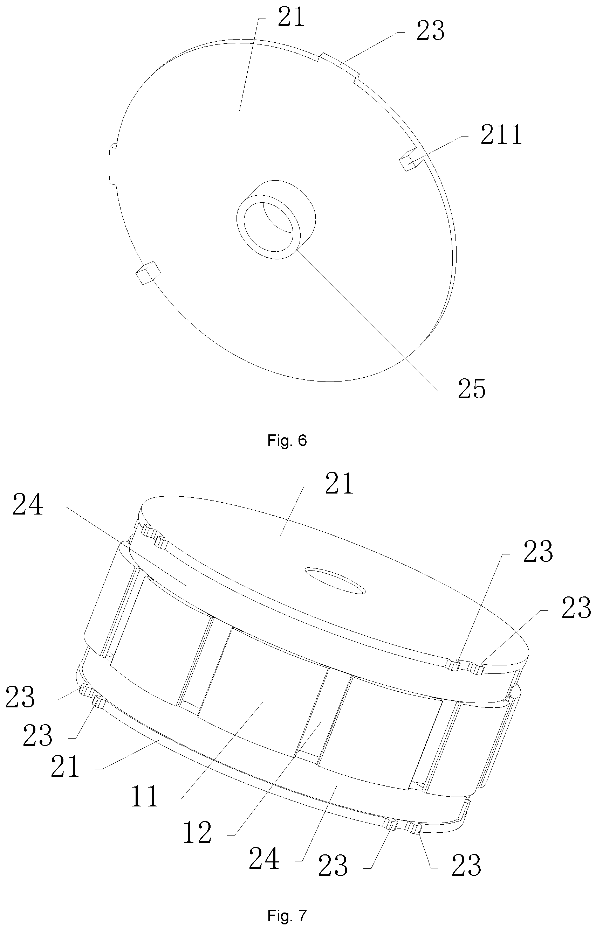

Furthermore, referring to Figs. 2 and 7, one or more protrusions 23 are provided extending outwards along the radial direction of the first rotor iron core 21.

In an embodiment of the present invention, the number of the protrusions 23 provided on the first rotor iron core 21 is one, and the protrusion 23 divers part of the magnetic flux lines of the first permanent magnet 24, so that the magnetic flux lines directly pass through the air gap and enter the stator, thereby reducing the repulsive force between the first rotor assembly 20 and the second rotor assembly 10, and reducing the assembling difficulty.

Furthermore, the number of protrusions 23 is a, where a/4 is an integer.

In another embodiment of the present invention, the number of protrusions 23 provided on the first rotor iron core 21 is a multiple of four, such as 4, 8, 12, or 16, etc., and most preferably, the number of the protrusions 23 provided on the first rotor iron core 21 is four. The even number of protrusions 23 can enable the interaction between the first rotor assembly 20 and the second rotor assembly 10 to be distributed in a symmetrical manner, but the excessive number of protrusions 23 will reduce the number of magnetic flux lines entering the second rotor iron core 11 from the first rotor assembly 20, thereby reducing the magnetic concentrating effect of the rotor assembly.

Furthermore, there are a plurality of protrusions 23, and when projected on an axial end face of the rotor structure along an axial direction of the rotor structure, a geometric centre of the protrusion 23 or a geometric centre of an adjacent protrusion 23 is connected with a central axis of the first rotor iron core 21 to form a connecting line, a central angle formed between adjacent connection lines is b, and the number of pole pairs of the rotor structure is p, wherein b/(360/2p) = b0, b0 is an integer.

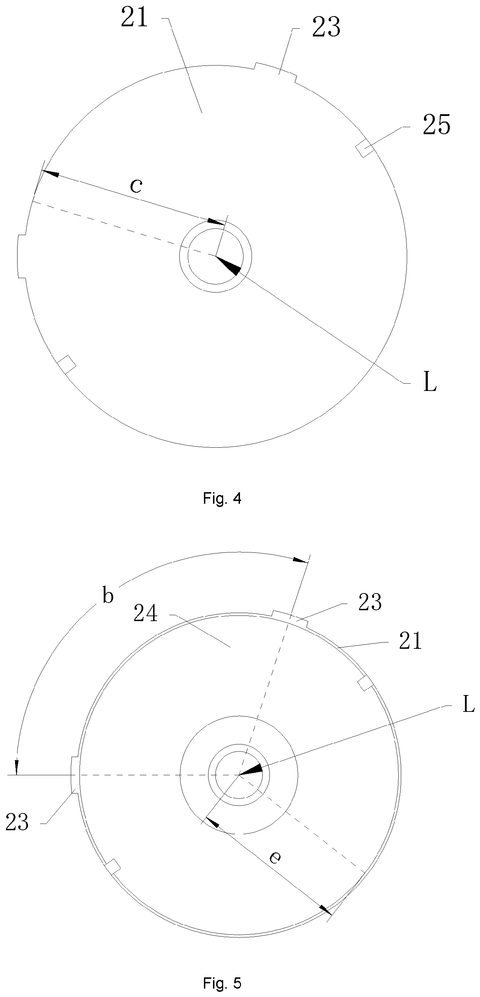

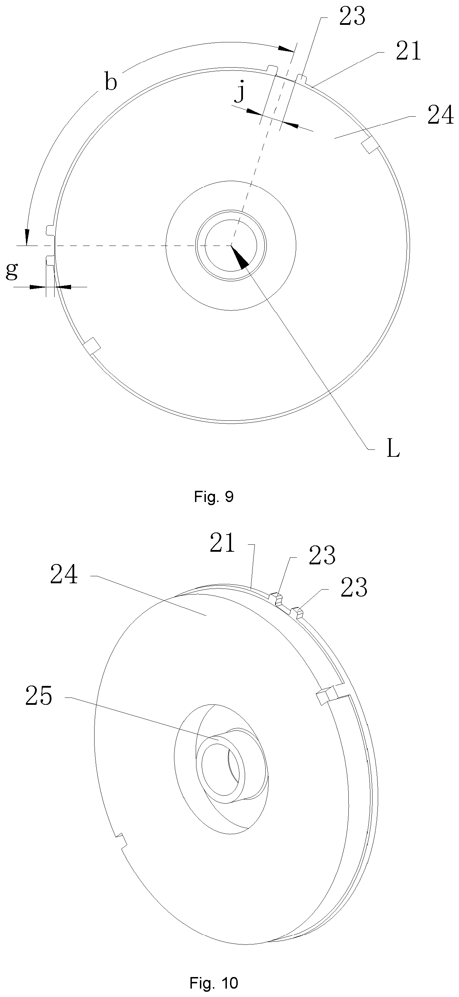

With reference to Fig. 5 and Fig. 9, the central angle between two adjacent protrusions 23 is b, the number of pairs of pole pairs of the rotor structure is p, wherein b/360/2p = b0, b0 is an integer. Such an arrangement can ensure the relative position between the protrusions 23 and polar regions of the first rotor assembly 20, and ensure that the protrusions 23 play the most appropriate role in reducing the repulsive force between the rotor assemblies.

Furthermore, b/(360/2p)=b0, b0 is an odd number.

In further embodiments of the present invention, preferably b/360/2p = b0, b0 being an odd number. In this way, it is beneficial that b/(360/2p) is the odd number. This arrangement is advantageous in that the odd number of b/(360/2p) ensures that polarity regions at the positions corresponding respective pairs of protrusions are identical, thereby improving the uniformity of the magnetic distribution.

Furthermore, when projected on an axial end face of the rotor structure along an axial direction of the rotor structure, a length of a connecting line between a central axis of the first rotor iron core and any point of an outer circle of the first rotor iron core is c, a length of a connecting line between a central axis of the second rotor iron core and any point of an outer circle of the second rotor iron core is d, wherein max(c) = max(d).

As shown in Figs. 3 and 4, in another embodiment of this invention, the length from the central axis of the first rotor iron core 21 to its outer circumference is c, and the length from the central axis of the second rotor iron core **11** to its outer circumference is d, wherein max(c) = max(d). In this embodiment, the setting of max(c) = max(d) ensures a certain width of air gap is maintained between the rotor assembly and the stator assembly, enhancing the operational reliability of the electric motor and making this rotor structure more practical.

Furthermore, when projected on an axial end face of the rotor structure along an axial direction of the rotor structure, a length of a connecting line between a central axis of the first rotor iron core 21 and any point of an outer circle of the first permanent magnet 24 is e, a length between a central axis of the second rotor iron core **11** and a central point of an end edge of an end of the second permanent magnet 12 away from the second shaft hole 13 is f, a length of a connecting line between the central axis of the second rotor iron core 11 and any point of an outer circle of the second rotor iron core 11 is d, wherein min(e) = f, or max(e)≤max(d). Such an arrangement limits the distance of the first permanent magnet 24 and the second permanent magnet 12 from the central axis of the rotor structure, so as to achieve superposition of the magnetic flux lines of the first permanent magnet 24 and the magnetic flux lines in the radial direction of the rotor iron core, thereby enhancing the magnetic concentrating effect of the electric motor.

As shown in Figs. 3 and 5, in one embodiment of this invention, the length from the central axis of the first rotor iron core 21 to the outer circumference of the first permanent magnet 24 is e, and the length from the central axis of the second rotor iron core 11 to the end of the second permanent magnet 12 far away from the second shaft hole 13 is f, where min (e) = f. Such an arrangement makes it easier for the protrusion 23 of the first rotor iron core 21 to guide away a part of the magnetic flux lines of the first permanent magnet 24, so as to reduce the repulsive force between the first rotor assembly 20 and the second rotor assembly 10 of the second rotor assembly 10, thereby making the rotor structure more practical.

With reference to Fig. 3 and Fig. 5, in one embodiment of the present invention, a distance between a central axis of the first rotor iron core 21 and an outer circumferential surface of the first permanent magnet 24 is e, and a distance between a central axis of the second rotor iron core **11** and an outer circumferential surface of the second rotor iron core **11** is d, wherein max(e) ≤ max(d). Such an arrangement is more conducive to reducing a repulsive force between the first rotor assembly 20 and the second rotor assembly 10 the first rotor assembly 20, thereby avoiding a problem in which repulsion occurs between multiple rotor assemblies while enhancing a magnetic concentrating effect of the rotor structure by employing multiple rotor assembly.

Furthermore, a plurality of protrusions 23 are provided, and the plurality of protrusions 23 are provided in pairs along the circumference of the first rotor iron core 21.

Referring to Fig. 7 to Fig.10, in the present embodiment, a plurality of protrusions 23 are provided in pairs along the circumferential direction of the first rotor iron core 21, and the protrusions 23 can take account of the effect of circumferential positioning and fixing of the first rotor assembly 20, and by means of a gap formed between the pairs of protrusions 23, the circumferential movement of the first rotor assembly 20 relative to the second rotor assembly 10 can be limited. In this way, the protrusion 23 of the first rotor iron core 21 guides away part of the magnetic flux lines of the first permanent magnet 24, thereby avoiding difficulty in assembling the rotor structure due to the repulsive force between the first rotor assembly 20 and the second rotor assembly 10 of the second rotor assembly 10.

Furthermore, the first permanent magnet 24 is of an integrated disc structure, and is divided into a plurality of different polar regions according to the magnetizing direction. Such an arrangement can reduce the manufacturing and assembly costs of the first permanent magnet 24, and enables different polar regions to be distributed after magnetization, so as to achieve polarity matching with the second permanent magnet 12.

Furthermore, when projected on an axial end face of the rotor structure along an axial direction of the rotor structure, and positions of at least one pair of the protrusions 23 corresponds to a position of a magnetic pole boundary line of adjacent polar regions of the first permanent magnet 24.

Referring to Fig. 6, in the present example, projection is performed on an axial end face of the rotor structure along the axial direction of the rotor structure, and the positions of the at least one pair of protrusions 23 corresponds to the position of the magnetic pole boundary line of the adjacent polar region of the first permanent magnet 24. Such arrangement can ensure the uniqueness of the distribution of the polar region of the first rotor assembly 20.

Furthermore, two adjacent pairs of protrusions 23 are arranged symmetrically with respect to the central line of a polar region of the first permanent magnet 24.

Referring to Fig. 6, adjacent pairs of protrusions 23 are symmetrically arranged about the center line of the polar region of the first permanent magnet 24. This arrangement helps guide the magnetic flux lines from each polar region to the stator, thereby reducing the repulsive force between the first rotor assembly 20 and the second rotor assembly 10 and enhancing the stability of the rotor structure.

Furthermore, the length of the protrusion 23 extending in the radial direction of the first rotor iron core 21 is g, and a minimum thickness of the first rotor iron core 21 in the axial direction is h, wherein g≥0.3*h.

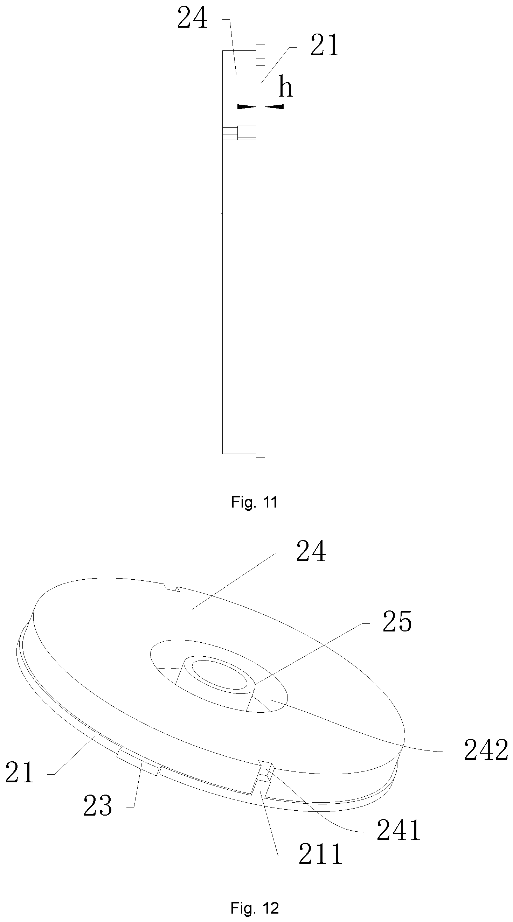

Referring to Figs. 9 and 11, in this embodiment, a length of the protrusion 23 extending in the radial direction of the first rotor iron core 21 is g, the minimum thickness of the first rotor iron core 21 in the axial direction is h, g ≥ 0.3*h. Such an arrangement serves to enhance the connection strength between the protrusions 23 and the first rotor iron core 21, and to limit a minimum radial extension dimension of the protrusion 23, so as to prevent the guiding effect on the magnetic field of the first permanent magnet 24 from being insignificant due to the excessively small size thereof, so that the working state of the rotor structure is more stable.

Furthermore, when projected on an axial end face of the rotor structure along an axial direction of the rotor structure, a thickness of the second permanent magnet 12 along a magnetic filling direction thereof is i, and an interval width between each pair of protrusions 23 along a tangential direction of the first rotor iron core 21 is j, wherein j≥0.25*i.

Referring to Figs. 3 and 9, in the present embodiment, projection is performed on the axial end face of the rotor structure along the axial direction of the rotor structure, the thickness of the second permanent magnet 12 along the magnetic filling direction thereof is i, and the interval width between each pair of protrusions 23 along the tangential direction of the first rotor iron core 21 is j, j≥0.25*i, which can ensure a relative interval distance between two adjacent protrusions 23.The protrusion 23 can take account of the effect of circumferential fixing of the first rotor assembly 20, and limit the minimum value of the tangential width thereof, thereby avoiding low reliability of the fixing effect of the protrusion 23.

Furthermore, the first rotor iron core 21 is provided with a limiting member 211, the first permanent magnet 24 is provided with a limiting structure 241, and the limiting member 211 is arranged corresponding to the limiting structure 241.

In another embodiment of the present invention, there are a plurality of limiting elements 211, there are a plurality of limiting structures 241, and the plurality of limiting elements 211 are disposed corresponding to the plurality of limiting structures 241 in a one-to-one correspondence manner. Such arrangement can make the connection between the first rotor iron core 21 and the first permanent magnet 24 more stable.

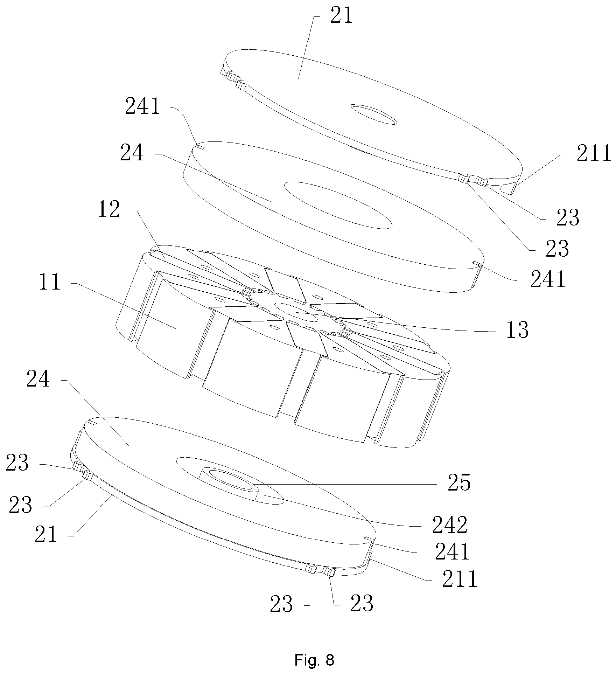

As shown in Figs. 8 and 12, during assembly of the rotor structure, the limiting member 211 on the first rotor iron core 21 cooperates with the limiting structure 241 on the first permanent magnet 24 to complete positioning, thereby preventing relative displacement and abnormal noise between the first rotor iron core 21 and the first permanent magnet 24 during operation of the first rotor assembly 20, and reducing friction and wear of the first rotor assembly 20.

With reference to Figs. 1 and 8, in another embodiment of the present invention, the limiting member 211 may be provided as a protrusion extending in an axial direction of the first rotor iron core 21, and the limiting structure 241 is provided as a positioning groove. Such an arrangement replaces a screw bolt connection in the art known to inventors, thereby reducing the number of parts to be arranged, reducing production costs and assembly time costs, and improving the economy of the rotor structure.

Furthermore, a boss 25 is provided on a side of the first rotor iron core 21 facing the first permanent magnet 24, the boss 25 is provided with a first shaft hole 2412 for the rotation shaft to pass through, a relief channel 242 is provided on the first permanent magnet 24, and a part of the boss 25 is arranged in the relief channel 242 in a penetrating manner.

Referring to Fig. 10, in an example of the present invention, the boss 25 is disposed on a side of the first rotor iron core 21 facing the first permanent magnet 24, the first permanent magnet 24 is provided with the relief channel 242, and an outer circumferential surface of a boss 25 located in the relief channel 242 is arranged at a distance from a side wall of the relief channel 242, the positioning, supporting, fixing, etc. of the first rotor assembly 20 and the second rotor assembly 10 in a production assembly process can be realized, the assembly difficulty of the rotor structure is reduced, and the assembly efficiency of the rotor structure is increased.

Furthermore, a through-groove extending axially along the first rotor iron core 21 is provided on the outer peripheral side of the first rotor iron core 21. In conjunction with what is shown in figure 8, a through-groove extending in an axial direction is provided on an outer circumferential face of the first rotor iron core 21 along a circumferential direction of the first rotor iron core 21, and such an arrangement can reduce the volume and weight of the first rotor iron core 21, thereby saving the material costs thereof.

Furthermore, a rotor assembly dynamic balance adjustment structure is disposed on the first rotor iron core 21.

In the described embodiment, in order to keep the first rotor assembly 20 in a working state in a moving balance, the first rotor iron core 21 is provided with the rotor assembly moving balance adjustment structure, and such arrangement can increase the reliability and stability of the first rotor assembly 20.

In an embodiment of the present invention, both the first rotor iron core 21 and the second rotor iron core 11 are made of a magnetically conductive material.

In another embodiment of the present invention, the first rotor iron core 21 is formed by stamping a magnetically conductive steel plate, and has the advantages of simple manufacturing, relatively low production cost, short production cycle, and better maintenance flexibility; the second rotor iron core 11 is formed by laminating silicon steel sheets; and since the silicon steel sheets have the advantages of high magnetic permeability, low magnetic hysteresis loss, low coercivity and the like, the energy loss of the motor can be reduced and the efficiency of the motor can be improved. Furthermore, the silicon steel sheet has good mechanical strength and corrosion resistance, and can withstand vibration and high temperature during motor operation.

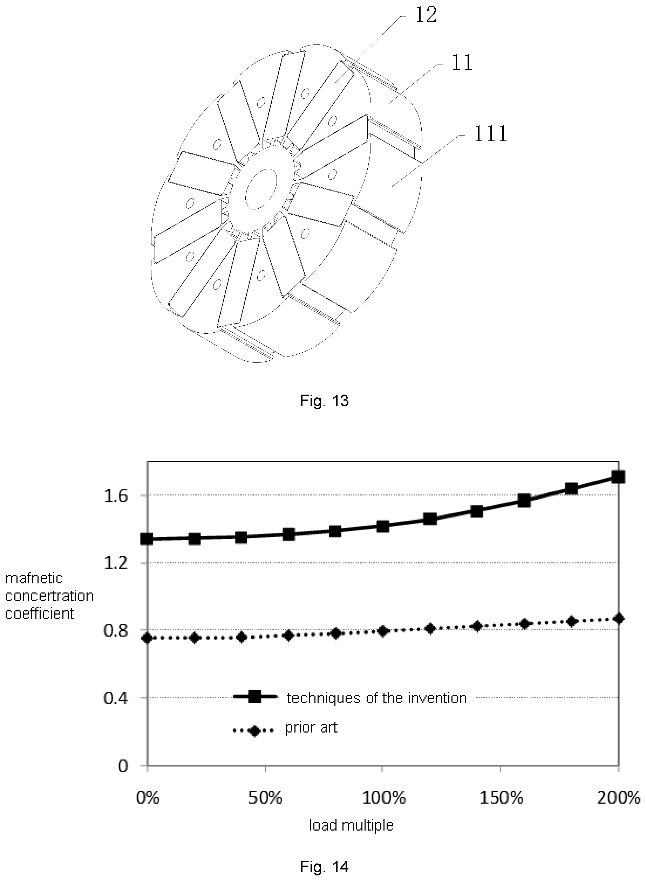

Furthermore, as shown in FIG. 13, a second rotor iron core segment 111 is formed between two adjacent magnet slots on the second rotor iron core 11. When the polar region of the first permanent magnet 24 arranged adjacent to the second rotor iron core segment 111 in the axial direction is of a first polarity, the polar regions of the two second permanent magnets 12 arranged adjacent to the second rotor iron core segment 111 in the circumferential direction are also of the first polarity. In another embodiment of this invention, the second rotor iron core 11 includes second rotor iron core segments 111, wherein one second rotor iron core segment 111 is arranged between every two adjacent magnet slots 212. The polarity of the adjacent magnet slots is the same as that of the first permanent magnet 24 adjacent to the second rotor iron core segment 111.

An optimal implementation is as follows: the first permanent magnet 24 are magnetized alternately in the axial direction with N and S poles, while the second permanent magnet 12 are magnetized alternately in the tangential direction with N and S poles. Under a given pole, the magnetization directions of both point toward the second rotor iron core 11. With this magnetization arrangement, the magnetic flux of the first permanent magnet 24 and the second permanent magnet 12 can be superimposed, thereby increasing the no-load magnetic flux.

In another embodiment of the present invention, the first rotor iron core 21 is fixedly connected to the first permanent magnet 24, and this arrangement can reduce vibration and abnormal noise generated by the first rotor assembly 20, making the operation of the rotor structure more stable and reliable. In the present invention, the fixing manner of the first permanent magnet 24 and the first rotor iron core 21 is not limited to adsorption, adhesion or fixing by a mechanical structure, etc., as long as the first permanent magnet 24 and the first rotor iron core 21 do not move relative to each other.

In another example of the present invention, there is also provided an electric motor, including a rotor structure and a stator structure, wherein the rotor structure is the rotor structure in the above examples.

Specifically, the rotor structure includes first rotor assembly 20, the first rotor assembly 20 are arranged in two groups, each set of the first rotor assembly 20 includes a first rotor iron core 21 and a first permanent magnet 24, a first rotor iron core 21 and a first permanent magnet 24 are arranged adjacent to each other; a protrusion 23 extending radially along the first rotor iron core 21 is arranged on the radially outer side of the first rotor iron core 21, the first rotor iron core 21 is provided with a first shaft hole 22 for the rotating shaft to pass through; a second rotor assembly 10, in which the second rotor assembly 10 includes the second rotor iron core 11 and the second permanent magnet 12, the second rotor iron core 11 is provided with the second shaft hole 13, a plurality of magnetic steel slots are provided in the circumferential direction of the second rotor iron core 11, and each of the magnetic steel slots is provided with a plurality of second permanent magnet 12. Two sets of first rotor assemblies 20 are respectively arranged at two ends of the second rotor assembly 10, the second rotor iron core 11 is disposed between first permanent magnet 24 of the two sets of first rotor assemblies 20, and the first permanent magnet 24 are disposed between an end portion of the second rotor assembly 10 and the first rotor iron core 21.

The magnetic flux lines emitted from the axial direction of the first rotor assembly 20 and the magnetic flux lines emitted from the radial direction of the second rotor assembly 10 of the second rotor assembly 10 enter the air gap after being concentrated in the iron core of the rotor structure, so that the magnetic concentrating effect of the rotor structure can be greatly improved. Two sets of first rotor assemblies 20 are provided, and each set of first rotor assembly 20 includes the first rotor iron core 21 and the first permanent magnet 24, the first rotor iron core 21 and the first permanent magnet 24 are arranged adjacent to each other; a protrusion 23 extending along the circumferential direction of the first rotor iron core 21 is arranged in the circumferential direction of the first rotor iron core 21, a magnetic flux line for conducting a part of the first permanent magnet 24, so that the magnetic flux line directly penetrates through the air gap and enters the stator, the repulsive force between first rotor assembly 20 and second rotor assembly 10 of second rotor assembly 10 may be reduced, to reduce assembly difficulties.

In the present embodiment, the rotor structure includes the first rotor assembly 20 and the second rotor assembly 10, which can achieve the effect of greatly improving the magnetic concentrating effect of the rotor structure. The first rotor assembly 20 are arranged in two groups, each set of the first rotor assembly 20 includes the first rotor iron core 21 and the first permanent magnet 24, the first rotor iron core 21 and the first permanent magnet 24 are arranged adjacent to each other, and the protrusion 23 extending in the circumferential direction of the first rotor iron core 21 is arranged in the circumferential direction of the first rotor iron core 21, so that the repulsive force between each rotor assembly is reduced, and the assembly difficulty is reduced.

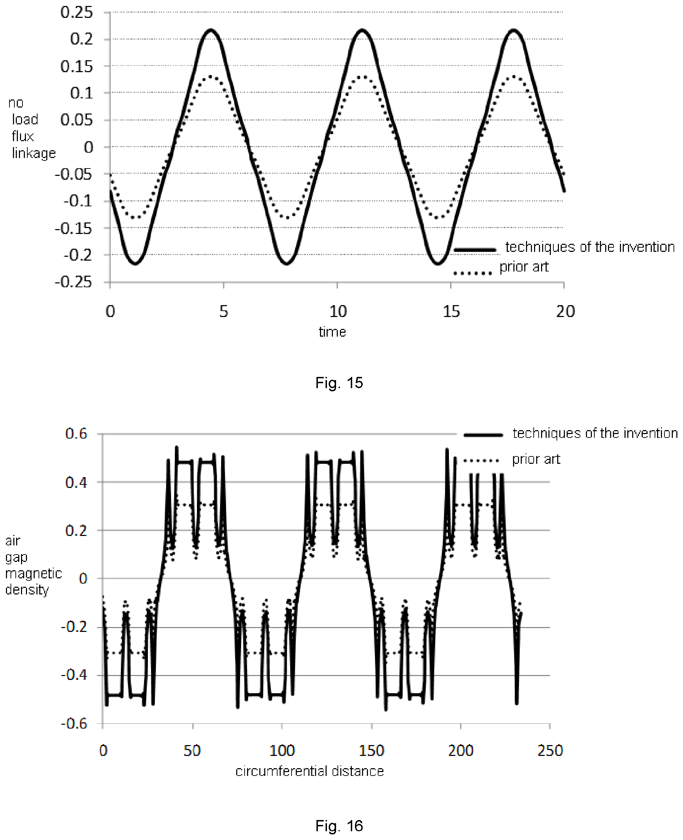

As shown in Fig. 14 to Fig. 16 in combination, compared with the art known to inventors, the electric motor in the foregoing embodiment has a remarkably increased magnetic concentration coefficient, has a stronger unloaded magnetic property, and has an air gap density substantially between 0.2 mm-0.4 mm, thereby ensuring stability and efficiency of the electric motor at the same time.

From the above description, it can be seen that the above examples of the present invention achieve the following technical effects:
the magnetic flux lines emitted from the axial direction of the first rotor assembly 20 and the magnetic flux lines emitted from the radial direction of the second rotor assembly 10 of the second rotor assembly 10 enter the air gap after being concentrated in the iron core of the rotor structure, so that the magnetizing effect of the rotor structure can be greatly improved.

There are two sets of first rotor assemblies 20. Each set of first rotor assembly 20 includes the first rotor iron core 21 and the first permanent magnet 24. The first rotor iron core 21 and the first permanent magnet 24 are arranged adjacent to each other. On the radial outer side of the first rotor iron core 21, protrusions 23 extending radially along the first rotor iron core 21 are provided to guide away part of the magnetic flux lines of the first permanent magnet 24, allowing the magnetic flux lines to directly pass through the air gap into the stator. This reduces the repulsive force between the first rotor assembly 20 and the second rotor assembly 10, lowering the assembly difficulty.

The protrusion 23 disposed on the first rotor iron core 21 helps to reduce the repulsive force between the first rotor assembly 20 and the second rotor assembly 10 of the second rotor assembly 10, reduce the assembly difficulty of the rotor structure, and increase the assembly efficiency of the rotor structure.

The first permanent magnet 24 is an integrated disk structure, or the first rotor iron core 21 is fixedly connected to the first permanent magnet 24. By means of this arrangement, vibration and abnormal noise generated by the first rotor assembly 20 can be reduced, so that the running of the rotor structure is more stable and reliable.

Spatially relative terms, such as "over", "above", "upper", "over", and the like, may be used herein for ease of description to describe spatial positional relationships of individual devices or features to other devices or features as illustrated in the figures. It will be understood that the spatially relative terms are intended to encompass different orientations in use or operation in addition to the orientation of the device depicted in the figures. For example, if the devices in the figures are inverted, devices described as "above" or "over" other devices or structures would then be oriented "under" or "under" the other devices or structures. Accordingly, the exemplary term "over" can encompass both an orientation of "over" and "under". The device may be positioned in various other ways as well (rotated 90 degrees or at other orientations), and the spatially relative descriptions used herein are to be construed accordingly.

In addition to the foregoing, it should be further noted that references to "one embodiment", "another embodiment", ' "an embodiment", and the like in this description means that a particular feature, structure, or characteristic described in connection with the embodiment is included in at least one embodiment generally described herein. The appearances of the same phrases in various places in the description are not necessarily referring to the same example. Further, when a particular feature, structure, or characteristic is described in connection with any example, it is submitted that it is within the scope of the present invention to effect such feature, structure, or characteristic in connection with other examples.

In the above examples, the description of each example has its emphasis, and the part not described in detail in a certain example may refer to the relevant description of other examples.

The foregoing descriptions are merely exemplary examples of the present invention, but are not intended to limit the present invention. For those skilled in the art, the present invention may have various modifications and variations. Any modifications, equivalent replacements, improvements and the like made within the spirit and principle of the present invention shall fall within the scope of protection of the present invention.

## Claims

1. A rotor structure, comprising:
a first rotor assembly (20), wherein two sets of the first rotor assemblies (20) are provided, each set of the first rotor assembly (20) comprising a first rotor iron core (21) and a first permanent magnet (24), the first rotor iron core (21) and the first permanent magnet (24) being disposed adjacent to each other, a protrusion (23) extending along a radial direction of the first rotor iron core (21) being provided on a radial outer side of the first rotor iron core (21), and the first rotor iron core (21) being provided with a first shaft hole (22) for a rotating shaft to pass through;
a second rotor assembly (10), wherein the second rotor assembly (10) comprises a second rotor iron core (11) and a second permanent magnet (12), the second rotor iron core (11) is provided with a second shaft hole (13), a plurality of magnetic steel slots are provided in a circumferential direction of the second rotor iron core (11), and each of the plurality of magnetic steel slots is provided with the second permanent magnet (12);
wherein the two sets of the first rotor assemblies (20) are respectively disposed at two axial ends of the second rotor assembly (10), the second rotor iron core (11) is disposed between the first permanent magnets (24) of the two sets of the first rotor assemblies (20), and the first permanent magnet (24) is disposed between an end portion of the second rotor assembly (10) and the first rotor iron core (21).

2. The rotor structure according to claim 1, wherein the protrusion (23) extending outwards along the radial direction of the first rotor iron core (21) is one or more.

3. The rotor structure according to claim 2, wherein a number of the protrusions (23) is a, and a/4 is an integer.

4. The rotor structure according to claim 2, wherein a plurality of protrusions (23) are provided, and when projected on an axial end face of the rotor structure along an axial direction of the rotor structure, a geometric centre of the protrusion (23) or a geometric centre of an adjacent protrusion (23) is connected with a central axis of the first rotor iron core (21) to form a connecting line, a central angle formed between adjacent connection lines is b, and a number of pole pairs of the rotor structure is p,
wherein b/(360/2p) = b0, b0 is an integer.

5. The rotor structure according to claim 4, wherein b/(360/2p) = b0, b0 is an odd number.

6. The rotor structure according to claim 1, wherein, when projected on an axial end face of the rotor structure along an axial direction of the rotor structure, a length of a connecting line between a central axis of the first rotor iron core (21) and any point of an outer circle of the first rotor iron core (21) is c, a length of a connecting line between a central axis of the second rotor iron core (11) and any point of an outer circle of the second rotor iron core (11) is d, wherein max(c) = max(d).

7. The rotor structure according to claim 1, wherein, when projected on an axial end face of the rotor structure along an axial direction of the rotor structure, a length of a connecting line between a central axis of the first rotor iron core (21) and any point of an outer circle of the first permanent magnet (24) is e, a length between a central axis of the second rotor iron core (11) and a central point of an end edge of an end of the second permanent magnet (12) away from the second shaft hole (13) is f, a length of a connecting line between the central axis of the second rotor iron core (11) and any point of an outer circle of the second rotor iron core (11) is d, wherein min(e) = f, or max(e)≤max(d).

8. The rotor structure according to claim 2, wherein a plurality of protrusions (23) are provided, and the plurality of protrusions (23) are disposed in pairs along a circumferential direction of the first rotor iron core (21).

9. The rotor structure according to claim 1, wherein the first permanent magnet (24) is an integrated disc structure, and is divided into a plurality of different polar regions according to a magnetizing direction.

10. The rotor structure according to claim 8, wherein, when projected on an axial end face of the rotor structure along an axial direction of the rotor structure, and positions of at least one pair of the protrusions (23) corresponds to a position of a magnetic pole boundary line of adjacent polar regions of the first permanent magnet (24).

11. The rotor structure according to claim 8, wherein two adjacent pairs of the protrusions (23) are disposed symmetrically with respect to a centre line of a polar region of the first permanent magnet (24).

12. The rotor structure according to claim 1, wherein a length of the protrusion (23) extending in the radial direction of the first rotor iron core (21) is g, and a minimum thickness of the first rotor iron core (21) in an axial direction is h, wherein g≥0.3*h

13. The rotor structure according to claim 1 or 8, wherein, when projected on an axial end face of the rotor structure along an axial direction of the rotor structure, a thickness of the second permanent magnet (12) along a magnetic filling direction thereof is i, and an interval width between adjacent protrusions (23) along a tangential direction of the first rotor iron core (21) is j, wherein j≥0.25*i.

14. The rotor structure according to claim 1, wherein the first rotor iron core (21) is provided with a limiting member (211), the first permanent magnet (24) is provided with a limiting structure (241), and the limiting member (211) is disposed corresponding to the limiting structure (241).

15. The rotor structure according to claim 14, wherein a plurality of limiting members (211) are provided, a plurality of limiting structures (241) are provided, and the plurality of limiting members (211) and the plurality of limiting structures (241) are disposed in a one-to-one correspondence.

16. The rotor structure according to claim 11, wherein a side of the first rotor iron core (21) facing the first permanent magnet (24) is provided with a boss (25), the first permanent magnet (24) is provided with a relief channel (242), and a part of the boss (25) passes through the relief channel (242).

17. The rotor structure according to claim 1, wherein a rotor assembly dynamic balance adjustment structure is disposed on the first rotor iron core (21).

18. The rotor structure according to claim 1, wherein the first rotor iron core (21) and the second rotor iron core (11) are both made of a magnetic conductive material.

19. The rotor structure according to claim 18, wherein the first rotor iron core (21) is formed by stamping a magnetically conductive steel sheet, and the second rotor iron core (11) is formed by stacking silicon steel sheets.

20. The rotor structure according to claim 9, wherein a second rotor iron core segment (111) is formed between two adjacent magnetic steel slots on the second rotor iron core (11); and in a case where a polar region of the first permanent magnet (24) adjacent to the second rotor iron core segment (111) in an axial direction is a first polarity, and polar regions of two second permanent magnet (12) adjacent to the second rotor iron core segment (111) in the circumferential direction are also the first polarities.

21. An electric motor, comprising a rotor structure and a stator structure, wherein the rotor structure is the rotor structure according to any one of claims 1 to 20.
